# FASCICULE DE BREVET EUROPEEN

(11) **EP 0 769 432 B1**
(45) Date de publication et mention de la délivrance du brevet: **22.11.2000**
(21) Numéro de dépôt: 96402160.4
(22) Date de dépôt: 11.10.1996
(51) Int. Cl.: B60R 22/02

(54) **Dispositif de rangement pour ceinture de sécurité de véhicules automobiles**
Vorrichtung zur Aufbewahrung eines Kraftfahrzeug- Sicherheitsgurtes
Storing device for a motor vehicle seat belt

(30) Priorité: 18.10.1995 FR 9512212
(43) Date de publication de la demande: 23.04.1997
(73) Titulaire: RENAULT, 92109 Boulogne-Billancourt (FR)
(72) Inventeur: Bonnet, Gérard, 78310 Maurepas (FR); Sangiani, Annie, 78340 Les Clayes s/Bois (FR)
(74) Mandataire: Ernst-Schonberg, Michel

(56) Documents cités:
- DE-A- 4 415 635
- FR-A- 2 260 360
- FR-A- 2 701 906

## Description

L'invention concerne un dispositif de rangement d'une ceinture de sécurité de véhicules automobiles qui possède une sangle associée à un enrouleur sur laquelle un connecteur de liaison avec un ancrage latéral bas en position d'utilisation de la ceinture, occupe également une position de rangement par suite de la non utilisation de la ceinture.

La publication FR-A-2671317 décrit une ceinture de sécurité dont un pêne connecteur possède une position de rangement localisée hors du champ de déplacement d'un dossier de siège ou de banquette arrière d'un véhicule. On utilise à cet effet un organe de fixation du pêne connecteur, par exemple sur une traverse de structure assemblée au bord transversal arrière du pavillon.

Une telle ceinture nécessite des manipulations répétées nécessaires au rangement et à la mise en service de la ceinture.

Ces manipulations nécessitent des contorsions de la part des occupants du siège si bien que le rangement de la ceinture est souvent défectueux.

La publication FR-A-2701906, comportant les caractéristiques du préambule de la revendication 1, décrit un dispositif de rangement pour ceinture de sécurité. Les pênes de la ceinture de sécurité sont maintenus dans leur position de rangement par l'intermédiaire d'un ressort.

Le moyen de retenue par l'intermédiaire d'un ressort est coûteux et ne permet pas un bon maintien des pênes en position de rangement.

Pour remédier à ces inconvénients l'invention propose un dispositif de rangement de la ceinture de sécurité, opérant sous l'action d'une force de traction de l'enrouleur communiqué à la sangle.

L'invention a également pour objet d'associer le dispositif de rangement à un ancrage de renvoi de la sangle, fixé sur une traverse de structure de la carrosserie, conjointement avec un moyen de retenue.

L'invention a encore pour objet un tel ancrage de renvoi associé à la ceinture de sécurité avec les différents constituants de la ceinture, dans le but de favoriser le montage de ladite ceinture de sécurité dans l'habitacle d'un véhicule automobile.

L'invention concerne plus particulièrement un dispositif de rangement d'une ceinture de sécurité qui possède :
- une sangle associée à un enrouleur et sur laquelle un premier connecteur de liaison avec un premier ancrage latéral bas en position d'utilisation de la ceinture, occupe également une position de rangement par suite de la non utilisation de la ceinture.
- un ancrage de renvoi de la sangle, fixé sur un élément de structure conjointement avec un moyen de retenue dudit premier connecteur.
- un deuxième connecteur coulissant sur la sangle, qui forme la transition entre une portion de sangle thoracique qui s'étend diagonalement en service devant l'utilisateur de la ceinture, à partir de l'ancrage de renvoi, et une portion de sangle de bassin qui s'étend entre le premier ancrage latéral bas et un deuxième ancrage latéral bas.

Selon l'invention, le premier connecteur est solidaire d'une plaque d'appui sur laquelle un bord de roulement, au contact d'une face du deuxième connecteur, est sensiblement confondu avec l'axe de rotation dudit premier connecteur en direction du moyen de retenue.

Dans le dispositif ainsi réalisé, le rangement de la ceinture de sécurité s'opère automatiquement par suite de l'effort de traction de l'enrouleur et du basculement de la plaque d'appui support du premier connecteur.

D'autres caractéristiques et avantages du dispositif apparaîtront à la lecture de la description d'un exemple de réalisation de celui-ci, en référence au dessin annexé dans lequel :
- la figure 1 est une représentation schématique de la ceinture de sécurité en position d'utilisation sur la place centrale d'une banquette à trois places d'un véhicule.
- la figure 2 est une représentation schématique de l'implantation représentée à la figure 1_{,} en position de rangement de la ceinture.
- les figures 3, 4, 5 représentent les positions successives des connecteurs de la ceinture de sécurité au cours du processus de rangement de celle-ci.

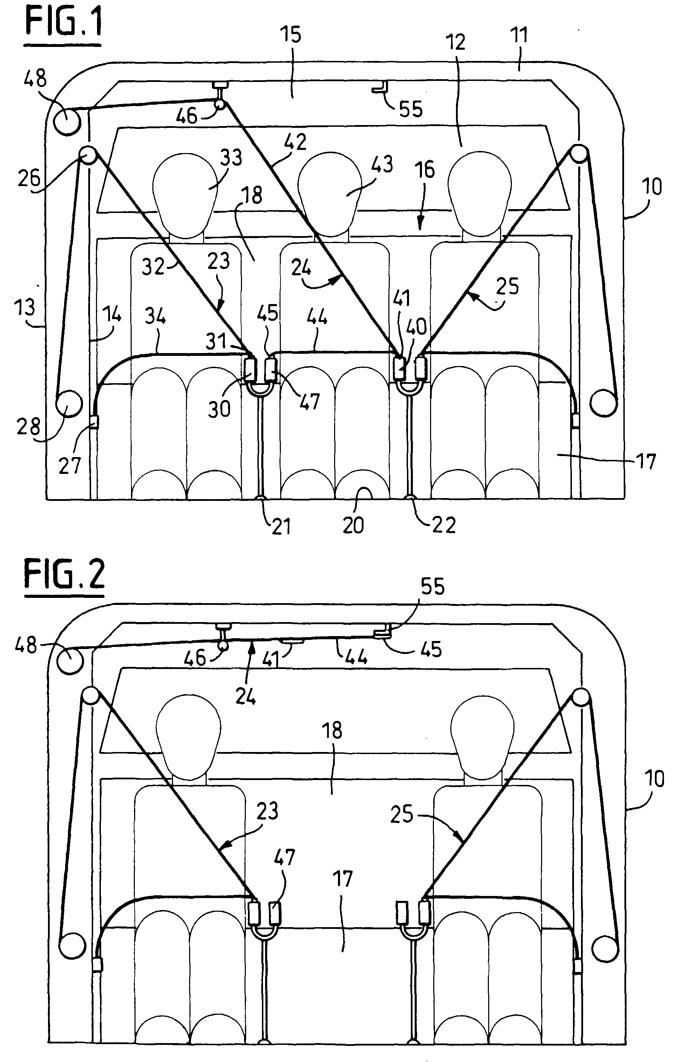

Sur les figures 1 et 2_{,} la référence 10 désigne la carrosserie d'un véhicule automobile dont on a représenté la partie arrière de l'habitacle.

La carrosserie 10 est ici matérialisée par son pavillon 11, la lunette arrière 12, une paroi latérale extérieure 13 et une paroi latérale intérieure 14. La paroi latérale intérieure et le pavillon 11 sont assemblés au niveau du bord supérieur de la lunette 12 et forment un élément de structure 15 tel qu'une traverse ou un montant de custode.

Ainsi que cela ressort du dessin, le siège arrière 16 est constitué à titre d'exemple par une assise 17 à trois places et par un dossier 18 en une ou deux parties.

L'assise 17 est supportée par un plancher 20 portant des ancrages latéraux bas de trois ceintures de sécurité 23, 24, 25.

A titre d'exemple, les ceintures de sécurité 23, 25 sont des ceintures conventionnelles à enrouleur à quatre ancrages constitués par :
- un ancrage de renvoi latéral extérieur haut 26 monté sur la paroi 14,
- un ancrage latéral extérieur bas 27 monté sur la paroi 14,
- un ancrage de l'enrouleur 28 rapporté sur la paroi 14,
- un ancrage latéral bas intérieur matérialisé par un boîtier de verrouillage 30 dans lequel est engagé un pêne connecteur 31. Le pêne connecteur 31 coulisse sur la sangle de la ceinture de sécurité et forme la transition entre :
   - une portion de sangle thoracique 32 qui s'étend diagonalement en service devant un occupant 33 vers le boîtier 30, à partir de l'ancrage latéral haut 26 situé au dessus de l'épaule,
   - une portion de sangle de bassin 34 qui s'étend entre l'ancrage 27 et le boîtier 30.

La ceinture de sécurité 24 concernée par le dispositif de rangement conforme à l'invention s'apparente à la ceinture telle que 23 et possède de ce fait l'avantage de pouvoir être fabriquée aisément à l'aide de composants connus.

Ainsi que cela est montré à la figure 1
- la portion de sangle thoracique 42 s'étend diagonalement en service devant l'occupant 43 à partir de l'ancrage de renvoi latéral extérieur haut 46 monté sur l'élément de structure 15 vers un deuxième ancrage latéral bas matérialisé par un boîtier de verrouillage 40 dans lequel est engagé un pêne connecteur 41.
- le pêne 41 peut coulisser sur la sangle 42 et forme comme précédemment décrit, la transition entre ladite portion de sangle 42 et une portion de sangle de bassin 44 qui s'étend entre le boîtier 40 et un boîtier 47 accolé au boîtier 30 dans lesquels est engagé un pêne connecteur 45. Le boîtier 47 est disposé à côté du boîtier de verrouillage 30 de la ceinture 23 précédemment décrite et est relié à titre d'exemple au plancher 20 par tout moyen connu (portion de sangle).
- un ancrage d'enrouleur 48 de la sangle est également localisé sur un élément de structure 15 dans le but de limiter la longueur utile de la sangle nécessaire à la mise en service de la ceinture de sécurité.

L'extrémité de la sangle 44 porte un autre moyen connecteur qui peut être matérialisé par le pêne 45.

On conviendra d'appeler dans ce qui suit
"premier connecteur", le pêne de liaison 45 de la sangle de la ceinture de sécurité avec "un premier ancrage latéral bas" 47
"deuxième connecteur", le pêne coulissant 41 sur la sangle pour former la transition entre la portion de sangle thoracique 42 et la portion de sangle de bassin 44 qui s'étend entre le premier ancrage latéral bas 47 et un deuxième ancrage latéral bas 40.

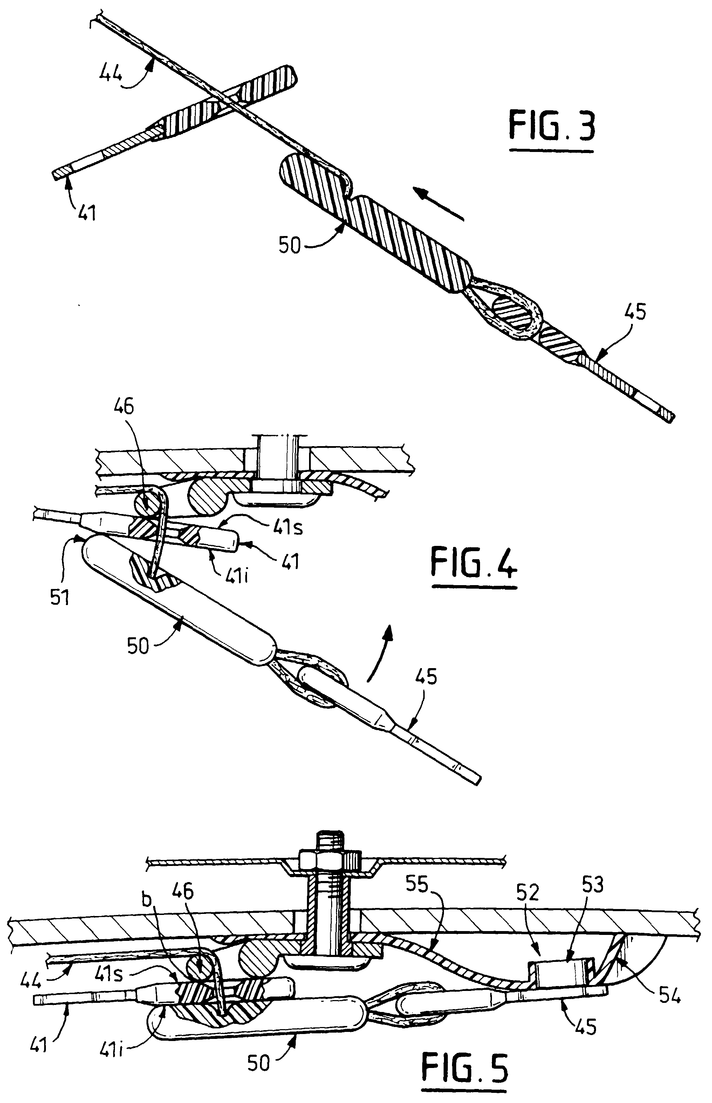

Ainsi que cela est montré aux figures 3 à 5, le pêne de liaison 45 est solidaire d'une plaque d'appui 50 qui enveloppe l'extrémité de la sangle de bassin 44 dans sa zone de liaison avec le pêne 45. Par construction la plaque d'appui 50 et le pêne de liaison 45 ont une liaison serrée semi-rigide dans le but d'assurer un positionnement relatif sensiblement plan auxdits organes 45-50.

Ainsi que cela est montré à la figure 4, l'extrémité de la plaque 50 opposée au pêne 45 possède un bord de roulement 51 au contact de la face 41i du pêne coulissant 41 localisé entre l'ancrage de renvoi 46 et la plaque 50.

Le bord de roulement 51 est sensiblement confondu avec l'axe de rotation du pêne 45 en direction d'un moyen de retenue 52. Ce dernier est constitué par une inclusion aimantée 53 formée sur un bossage 54 d'une base support 55 de l'ancrage de renvoi 46.

Dans le but de favoriser le blocage du pêne 45 au contact de l'inclusion 53, ce dernier est en acier.

Le pêne coulissant 41 possède une face 41 s opposée à la face de roulement au contact d'une zone de butée "b" portée par l'ancrage de renvoi 46. La zone de butée "b" permet le positionnement correct du pêne 41 ainsi que la superposition de la plaque 50 sur le pêne 41 indispensable au rangement automatique des pênes 41, 45 ainsi que cela est montré à la figure 5.

On peut de la sorte constater que la force de traction communiquée par l'enrouleur 48 à la ceinture a pour effet d'attirer simultanément le pêne 41 et la plaque d'appui 50 au contact de l'ancrage de renvoi 46 et le positionnement correct du pêne 45 au contact de l'inclusion aimantée 53.

## Revendications

1. Dispositif de rangement pour ceinture de sécurité de véhicules automobiles qui possède :
- une sangle associée à un enrouleur (48) sur laquelle un premier connecteur (45) de liaison avec un premier ancrage latéral bas (47) en position d'utilisation de la ceinture, occupe également une position de rangement par suite de la non utilisation de ladite ceinture
- un ancrage de renvoi (46) de la sangle, fixé sur un élément de structure conjointement avec un moyen de retenue (52) dudit premier connecteur (45)
- un deuxième connecteur (41) coulissant sur la sangle, qui forme la transition entre une portion de sangle thoracique (42) qui s'étend diagonalement en service devant l'utilisateur de la ceinture, à partir de l'ancrage de renvoi (46), et une portion de sangle de bassin (44) qui s'étend entre le premier ancrage latéral bas (47) et un deuxième ancrage latéral bas (40),
caractérisé par le fait que le premier connecteur (45) est solidaire d'une plaque d'appui (50) sur laquelle un bord de roulement (51), au contact d'une face du deuxième connecteur (41), est sensiblement confondu avec l'axe de rotation dudit premier connecteur (45) en direction du moyen de retenue (52) et que l'ancrage de renvoi (46) porte une zone de butée (b) et de positionnement d'une face (41s) du deuxième connecteur (41) opposée à la face (41i) en contact de roulement avec le bord (51) de la plaque d'appui (50) du premier connecteur (45).

2. Dispositif selon la revendication 1, caractérisé par le fait que le moyen de retenue du premier connecteur (45) est constitué par une inclusion aimantée (53) formée sur le bossage (54) d'une base support (55) de l'ancrage de renvoi (46).

## Patentansprüche

1. Vorrichtung zur Aufbewahrung eines Kraftfahrzeug-Sicherheitsgurtes, der aufweist:
- einen einem Aufwickler (48) zugeordneten Gurt mit einem ersten Verbindungsteil (45) zur Verbindung mit einer ersten seitlichen unteren Verankerung (47) bei der Benutzung des Sicherheitsgurtes, und der eine Aufbewahrungsstellung einnimmt bei der Nichtbenutzung des Sicherheitsgurtes
- eine Umlenkverankerung (46) des Gurtes, die an einem Teil des Aufbaus zusammen mit einer Halteanordnung (52) für das erste Verbindungsteil (45) befestigt ist
- ein zweites Verbindungsteil (41), das am Gurt gleitet und das die Verbindung herstellt zwischen einem Teil des Schultergurtes (42), der sich beim Gurtanlegen vor dem Benutzer des Sicherheitsgurtes diagonal erstreckt, ausgehend von der Umlenkverankerung (46), mit einem Teil des Beckengurtes (44), der sich zwischen der ersten unteren seitlichen Verankerung (47) und einer zweiten unteren Verankerung (40) erstreckt
dadurch gekennzeichnet, dass das erste Verbindungsteil (45) mit einer Stützplatte (50) fest verbunden ist, auf der eine Abrollkante (51), die mit einer Seite des zweiten Verbindungsteils (41) in Verbindung steht, im wesentlichen zusammenfällt mit der Rotationsachse des ersten Verbindungsteils (45) in Richtung der Halteanordnung (52) und dass die Umlenkverankerung (46) einen Bereich (b) aufweist als Anschlag und zur Positionierung einer Seite (41s) des zweiten Verbindungsteils (41) gegenüber einer Seite (41i) im Rollkontakt mit dem Rand (51) der Stützplatte (50) des ersten Verbindungsteils (45).

2. Vorrichtung nach Anspruch 1, dadurch gekennzeichnet, dass die Halteanordnung des ersten Verbindungsteils (45) aus einem magnetisierten Einsetzteil (53) besteht, das auf einem Vorsprung (54) eines Halteteils (55) für die Umlenkverankerung (46) ausgebildet ist.

## Claims

1. A storage device for automobile vehicle safety belts which comprises:
- a strap associated with a winder (48) on which a first connector (45), connecting with a first lower lateral anchor (47) in the position of use of the belt, also occupies a storage position when the belt is not being used,
- a recall anchor (46) for the strap, fixed on a structural member jointly with a means (52) for retaining the first connector (45),
- a second connector (41) sliding on the strap, which forms the transition between a chest strap portion (42) which extends diagonally in use over the belt user, from the recall anchor (46), and a pelvic strap portion (44) which extends between the first lower lateral anchor (47) and a second lower lateral anchor (40),
characterised in that the first connector (45) is rigid with a support plate (50) on which a roller edge (51), in contact with a surface of the second connector (41), is substantially merged with the axis of rotation of the first connector (45) in the direction of the. retaining means (52) and in that the recall anchor (46) bears a zone of abutment (b) and positioning of a surface (41s) of the second connector (41) opposite the surface (41i) in roller contact with the edge (51) of the support plate (50) of the first connector (45).

2. A device as claimed in claim 1, characterised in that the retaining means of the first connector (45) is formed by a magnetised inclusion (53) formed on the boss (54) of a support base (55) of the recall anchor (46).
